(19) Europäisches Patentamt
European Patent Office
Office européen des brevets

(11) **EP 2 353 898 B1**

(12) **EUROPEAN PATENT SPECIFICATION**

(45) Date of publication and mention
of the grant of the patent:
**15.05.2013 Bulletin 2013/20**

(51) Int Cl.:
*F24H 3/12* $^{(2006.01)}$     *F24H 9/20* $^{(2006.01)}$
*F24H 3/04* $^{(2006.01)}$     *F24H 9/18* $^{(2006.01)}$
*B60H 1/22* $^{(2006.01)}$     *H05B 3/50* $^{(2006.01)}$

(21) Application number: **10189020.0**

(22) Date of filing: **27.10.2010**

(54) **Electric heating device and vehicle air conditioner**

Elektrische Heizvorrichtung und Fahrzeugklimaanlage

Dispositif de chauffage électrique et climatiseur d'air de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2010 JP 2010017432**

(43) Date of publication of application:
**10.08.2011 Bulletin 2011/32**

(73) Proprietor: **Mitsubishi Heavy Industries, Ltd.
Tokyo 108-8215 (JP)**

(72) Inventors:
• **Saito, Katsuhiro**
**Tokyo Tokyo 108-8215 (JP)**
• **Suetake, Hideki**
**Tokyo Tokyo 108-8215 (JP)**
• **Iritani, Yoichiro**
**Tokyo Tokyo 108-8215 (JP)**
• **Matsubara, Shirou**
**Tokyo Tokyo 108-8215 (JP)**
• **Nakagawa, Nobuya**
**Tokyo Tokyo 108-8215 (JP)**

(74) Representative: **Henkel, Breuer & Partner
Patentanwälte
Maximiliansplatz 21
80333 München (DE)**

(56) References cited:
DE-A1- 10 141 146     US-A- 6 093 909
US-A1- 2001 043 808

**Description**

[Technical field]

The present invention relates to an electric heating device that heats fluid by using a heating element, and a vehicle air conditioner including the same.

[Background art]

In a vehicle such as a car, when a vehicle interior is heated, air inside and outside the vehicle interior is taken in, and an air temperature is adjusted to a predetermined air blowing temperature by air heated by heat exchange with fluid, which is a heating medium, and cooling air cooled by heat exchange, and the temperature-adjusted air is blown into the vehicle interior. In this case, the fluid that becomes a heat source for heating is heated by a heating unit before the heat exchange with the air. In an electric car or the like that do not have an engine and thus cannot use waste heat of the engine as the heat source of the heating unit, an electric heating device is used as the heating unit. As the electric heating device, a device that uses a plurality of heating elements that generate heat by energization has been known.

In Patent Literature 1, an electric heating device having a plurality of circulation chambers and heating chambers is disclosed. A medium flows into the respective circulation chambers, and a heating element is held in the respective heating chambers. The medium that flows in the circulation chambers is heated by the heating element held in the heating chambers. Patent Literature 1 discloses that the medium is a fluid medium. Further, it also discloses that the heating element is a PTC (Positive Temperature Coefficient) element. The PTC element generates heat by being energized.

[Citation List]

[Patent Literature]

[PTL 1] Japanese Patent Application Laid-open No. 2008-7106 (Claim 1, Claim 2, paragraph 0001, paragraph 0007, Fig. 3)

[Summary of Invention]

[Technical Problem]

Generally, when maximum output is required for the electric heating device, all heating elements are energized. When required output is zero, energization to all heating elements is suspended. When the output required for the electric heating device is intermediate output, which is in between the maximum output and zero, a part of the heating elements is energized, and energization to the remaining heating elements is suspended.

As described in Patent Literature 1, when a plurality of circulation chambers, as flow paths in which fluid flows, are provided in the inside of the electric heating device, a flow rate in each of the circulation chambers of the medium supplied from an inlet port is not always uniform, and the flow rate will deviate. Generally, a quantity of heating of fluid by the heating elements depends on an amount of fluid to be heated. As described above, therefore, at the time of intermediate output when a part of the heating elements is energized, in view of heating efficiency, it is desired that fluid is heated by energizing the heating element in a circulation chamber having a larger flow rate, and energization in a circulation chamber having a smaller flow rate is suspended.

However, in Patent Literature 1, because performing heating according to the flow rate of the medium in the circulation chamber is not taken into consideration, when the heating element in the circulation chamber having a small flow rate is energized, the quantity of heating becomes less, and as a result, heating efficiency decreases and unnecessary power is consumed.

US6093909A discloses an electric flow heater for heating liquid in closed cycle in a motor vehicle according to the preamble of claim 1. The electric flow heater comprises at least one radiator with at least one channel through which the liquid to be heated flows, and at least one PTC-heating element for heating the closely adjacent radiator. Using a control means the PTC-heating elements may be individually turned on and off so that the temperature of the liquid flowing through the flow heater can be adjusted stepwise to the desired heating power.

The present invention has been achieved to solve the above problems, and an object of the present invention is to provide an electric heating device that can efficiently heat fluid at the time of intermediate output, and a vehicle air conditioner including the electric heating device.

[Solution to Problem]

According to an aspect of the present invention, an electric heating device includes the features of claim 1.

According to the electric heating device, at the time of intermediate output, a flow path among the plurality of flow paths having a relatively large flow rate of fluid is heated. Because a quantity of heat that can be provided to fluid flowing in the flow path increases as the flow rate of fluid increases, heating efficiency at the time of intermediate output can be improved. Further, because a predetermined quantity of heat can be acquired quickly, supply of fluid to the electric heating device can be stopped at an early stage. Therefore, power or the like required for supplying fluid to the electric heating device can be reduced.

Advantageously, in the electric heating device, the heating element is a PTC element.

The PTC element generates heat by energization. Upon reaching a certain temperature, the PTC element largely increases its resistance and is held at the certain temperature.

Further, as the temperature increases, a value of an electric current flowing in the PTC element decreases. According to the electric heating device, therefore, an abnormal temperature increase in the heating module can be prevented. Further, power consumption required for generating heat in the heating elements can be reduced.

Advantageously, the electric heating device includes: a first header that is provided at one end of the flow paths and supplies fluid to the flow paths; and a second header that is provided at the other end of the flow paths and collects fluid discharged from the flow paths. The first header includes a fluid supply port for supplying fluid into the first header, and the second header includes a fluid discharge port for discharging fluid to outside of the second header.

Fluid supplied from the fluid supply port to the first header sequentially flows from a flow path close to the fluid supply port toward a flow path away from the fluid supply port. Therefore, a static pressure distribution is generated in the first header. Also in the second header, a static pressure distribution is generated because static pressure near the fluid discharge port decreases most. Due to the static pressure distribution in the headers, a magnitude of flow rate of fluid differs in each flow path. According to the electric heating device, even when there is a difference in the magnitude of flow rate in the respective flow paths due to the static pressure distribution in the headers, heating efficiency at the time of intermediate output can be improved. Further, in the electric heating device, fluid is supplied from the first header to the flow path formed of a tubular structure, for example, a tube. Fluid discharged from the flow path is collected in the second header. Therefore, leakage of fluid to outside of the flow path can be suppressed, as compared with a structure in which flow paths are formed by partitioning a casing by walls or the like.

According to another aspect of the present invention, a vehicle air conditioner includes: a blower that takes outside air into an air flow path of an air conditioning unit and circulates air in a vehicle interior; a cooler that is arranged on a downstream side of the blower and cools outside air; and a heater that is arranged on a downstream side of the cooler and heats air cooled by the cooler. An electric heating device for heating fluid supplied to the heater is provided, and the electric heating device is the electric heating device discussed above, and includes a circulation circuit for circulating the fluid to the electric heating device.

By applying the electric heating device according to any one of inventions described above to a vehicle air conditioner, when adjustment of temperature to approximate an intermediate temperature between heating and cooling in an intermediate period (in the spring and autumn) is required, the electric heating device according to the inventions described above provided in the vehicle air conditioner is set to intermediate output at which a part of the heating elements is energized. At this time, the electric heating device can preferentially heat a flow path having a relatively large flow rate of fluid, and thus unnecessary power consumption can be suppressed and heating efficiency can be improved. As a result of improving the heating efficiency, the flow rate that becomes a required quantity of heating can be reduced, thereby enabling to suppress driving power of a fluid supply unit that supplying fluid, such as a pump. Particularly, in a case of an electric car, power consumption of the entire car can be suppressed, thereby enabling to increase its driving efficiency.

Advantageously, the vehicle air conditioner includes a controller that includes an in-vehicle temperature detector and instructs a predetermined output to the electric heating device according to an in-vehicle temperature detected by the in-vehicle temperature detector.

According to the vehicle air conditioner, optimum output control of the electric heating device provided in the vehicle air conditioner according to the in-vehicle temperature is realized. Therefore, the heating efficiency of the electric heating device is further improved, and power consumption by the vehicle air conditioner can be further suppressed. Particularly, in a case of an electric car, power consumption of the entire car can be suppressed, thereby enabling to increase its driving efficiency.

[Advantageous Effects of Invention]

According to the electric heating device of the present invention, fluid can be heated efficiently at the time of intermediate output of the electric heating device. Further, according to the vehicle air conditioner of the present invention, at the time of intermediate output of the electric heating device, power consumption of the vehicle air conditioner can be reduced.

[Brief Description of Drawings]

[Fig. 1] Fig. 1 is a perspective view of an overall configuration of an electric heating device according to a first embodiment.

[Fig. 2] Fig. 2 is an exploded perspective view for explaining a configuration of the electric heating device shown in Fig. 1.

[Fig. 3] Fig. 3 is a sectional view for explaining a configuration of the electric heating device shown in Figs. 1 and 2.

[Fig. 4] Fig. 4 is an exploded perspective view for explaining a configuration of a heating module shown in Fig. 1.

[Fig. 5] Fig. 5 is a conceptual diagram of a static pressure distribution in each header.

[Fig. 6] Fig. 6 is a sectional view for explaining a verification example of the electric heating device according to the first embodiment.

[Fig. 7] Fig. 7 depicts a flow rate of fluid flowing in respective flow paths of the electric heating device shown in Fig. 6.

[Fig. 8] Fig. 8 is a schematic configuration diagram of a vehicle air conditioner.

[Description of Embodiments]

Exemplary embodiments of an electric heating device and a vehicle air conditioner according to the present invention will be explained below in detail with reference to the accompanying drawings. The present invention is not limited to the embodiments.

[First embodiment]

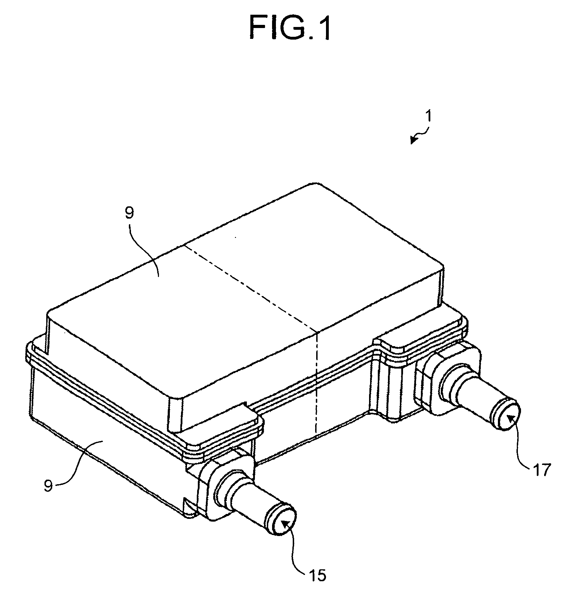

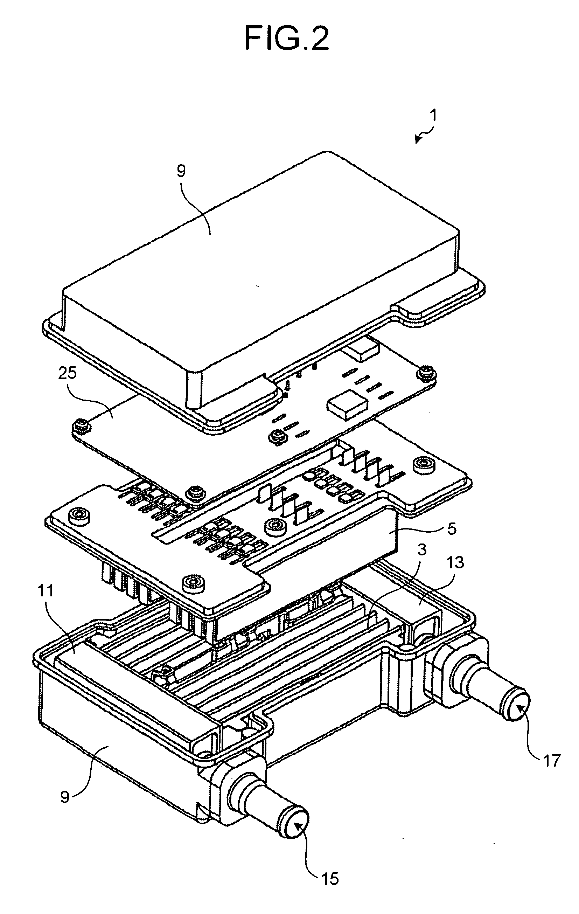

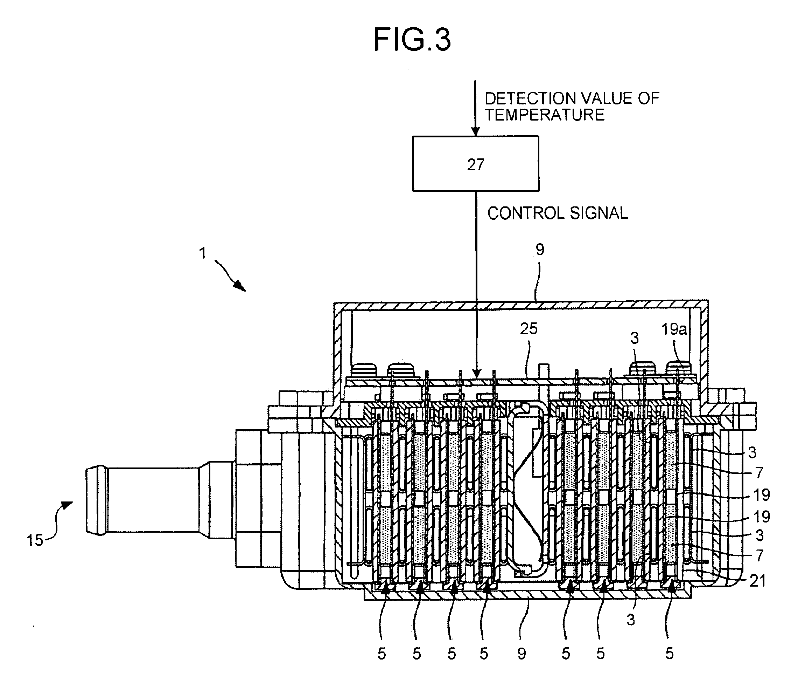

Fig. 1 is a perspective view of an overall configuration of an electric heating device according to a first embodiment. Fig. 2 is an exploded perspective view for explaining the configuration of the electric heating device shown in Fig. 1. Fig. 3 is a sectional view for explaining the configuration of the electric heating device shown in Figs. 1 and 2. Fig. 3 is a sectional view in which a surface cut along a one-dot chain line in Fig. 1 is viewed from a second header 13 toward a direction of a first header 11. In other words, Fig. 3 is a sectional view of a casing 9 orthogonal to a longitudinal direction of a flow path 3 as viewed from the second header 13 toward the direction of the first header 11.

As shown in Figs. 1 to 3, the electric heating device 1 according to the present embodiment includes the flow path 3 and a heating module 5. Heating elements 7 are held in the heating module 5. The flow paths 3 and the heating modules 5 are alternately arranged in the casing 9. In a cross-sectional surface of the casing 9 orthogonal to the longitudinal direction of the flow path 3, that is, in Fig. 3, it is defined that a direction in which the flow paths 3 and the heating modules 5 are alternately arranged is a lateral direction, and a direction orthogonal to the lateral direction is a longitudinal direction, for descriptive purposes.

For example, the flow path 3 can have a tubular structure, and it can be a tube. A plurality of flow paths 3 are provided in parallel in the casing 9. The flow paths 3 are arranged so that a plurality of rows is formed in the lateral direction and in the longitudinal direction. In the electric heating device 1, the flow paths 3 are arranged in two rows in the longitudinal direction and in ten rows in the lateral direction; however, these can be appropriately changed according to a place where the electric heating device 1 is arranged and a required output. Particularly, the flow path 3 can be arranged in one row in the longitudinal direction.

The flow path 3 is provided such that one end face opens in the first header 11, and the other end face opens in the second header 13. That is, the first header 11 and the second header 13 are communicated with each other by the flow path 3. The first header 11 includes a fluid supply port 15 for introducing fluid into the first header 11. The second header 13 includes a fluid discharge port 17 for discharging fluid to outside of the second header 13. In the electric heating device 1, the fluid supply port 15 and the fluid discharge port 17 open in the same direction in the lateral direction.

The respective heating modules 5 are arranged between the flow paths 3 adjacent to each other in the lateral direction. In other words, the heating modules 5 are arranged between rows of the flow paths 3 in the lateral direction. In the electric heating device 1, eight heating modules 5 are provided between rows of the flow paths 3 in the lateral direction; however, the number thereof can be appropriately changed according to the arrangement of the flow paths 3, the configuration of the heating module 5 or the like. The heating module 5 includes the heating element 7, an electrode plate 19, and an insulating plate 21.

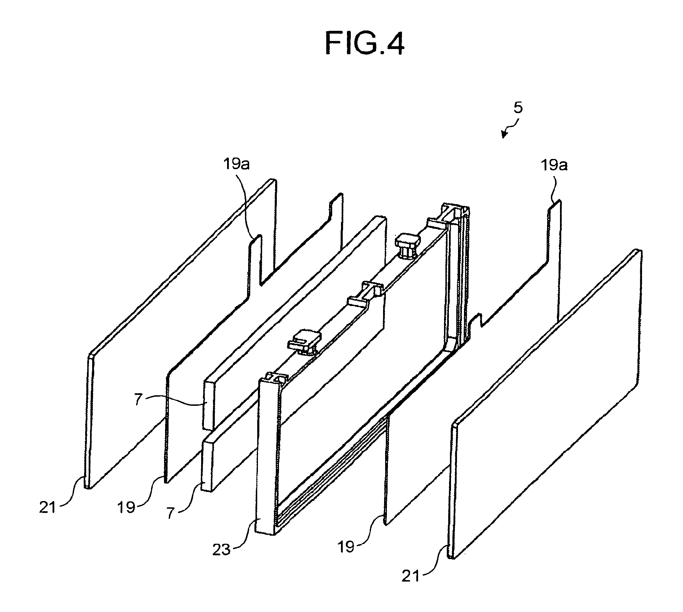

Fig. 4 is an exploded perspective view for explaining the configuration of the heating module shown in Fig. 1. The electrode plates 19 are provided on both sides of the heating element 7. The insulating plates 21 are provided on the side opposite to a surface of the electrode plate 19 in contact with the heating element 7. The heating elements 7, the electrode plates 19, and the insulating plates 21 are held in a frame 23 to constitute the heating module 5. The frame 23 is formed of a resin material having a high heat resistance, for example, polyphenylene sulfide. The insulating plate 21 insulates between the heating module 5 and the flow path 3, and alumina (aluminum oxide, $Al_2O_3$) is used as a material therefor. The insulating plate 21 is heat-transferably connected to the electrode plate 19 and the flow path 3.

The electrode plate 19 is electrically connected to a substrate 25 shown in Fig. 3. The electrode plate 19 is electrically connected to the heating element 7, so that heat transfer therebetween is possible. The electrode plate 19 and the heating element 7 can be bonded by using, for example, thermosetting silicon. The electrode plate 19 includes a protrusion 19a formed by protruding a part of the electrode plate 19. The protrusion 19a is connected to the substrate 25 provided in the casing 9. In the lateral direction in the cross-sectional surface of the casing 9 orthogonal to the longitudinal direction of the flow path 3, the respective protrusions 19a protruding from the adjacent heating modules 5 can be connected with each other, and the protrusion 19a can be connected to the substrate 25.

The substrate 25 has a function of energizing the electrode plate 19 provided in the heating module 5 via the protrusion 19a of the electrode plate 19. When the electrode plate 19 is energized, the heating element 7 provided in contact with the electrode plate 19 is energized to generate heat. The heating element 7 can be a PTC element, which is a positive-temperature-coefficient thermistor element. The PTC element generates heat by energization. Upon reaching a certain temperature, the PTC element largely increases its resistance, and is held at a certain temperature. Further, as the temperature increases, a value of an electric current flowing in the PTC element decreases.

A controller 27 determines output of the electric heating device 1 based on a detection value of the temperature or the like at a predetermined place, and transmits a control signal corresponding to the output to the substrate 25. The output of the electric heating device 1 can be mainly divided into three, that is, maximum output, intermediate output, and minimum output. When the electric heating device 1 is controlled to the maximum output, the substrate 25 is controlled to energize all of the electrode plates 19. When the electric heating device 1 is controlled to the minimum output, in other words, when the output is controlled to be zero, the substrate 25 is controlled to suspend energization to all of the electrode plates 19. When the electric heating device 1 is controlled to the intermediate output, which is in between the maximum output and the minimum output, the substrate 25 is controlled to energize parts of the electrode plates 19 and suspend energization to the remaining electrode plates 19.

An operation of the electric heating device 1 is explained below. Fluid boosted by a fluid supply unit (not shown), for example, by a pump is supplied into the first header 11 via the fluid supply port 15. Fluid supplied to the first header 11 flows sequentially from the flow path 3 closest to the fluid supply port 15. Fluid flowing into the flow path 3 is heated by heat exchange with the heating module 5 provided adjacent to the flow path 3 and flows out to the second header 13. Fluid flowing out to the second header 13 is discharged to outside of the second header 13 via the fluid discharge port 17.

At this time, a quantity of heat that can be given to fluid flowing in the adjacent flow path 3 by the heating module 5 can be indicated by the following equation 1.

$$Q = k \cdot A \cdot (T_p - T_w) \qquad (\text{Equation 1})$$

$$K \propto Q_S$$

In the equation, Q denotes a quantity of heat given to fluid by the heating module 5, k denotes an overall heat transfer coefficient indicating thermal conductivity, A denotes a heat transmission area, $T_p$ denotes a surface temperature of the heating element 7, $T_w$ denotes a temperature of fluid, and $Q_S$ denotes a flow rate of fluid in the flow path 3. The overall heat transfer coefficient k and the flow rate $Q_S$ of fluid are substantially in a proportional relation, and when $Q_S$ increases, k also increases. In the electric heating device 1, the heat transmission area A is constant, and the temperature $T_w$ of fluid is constant.

At the time of intermediate output of the electric heating device 1, the heating element 7 held by a part of the heating module 5 is energized by the substrate 25 via the electrode plate 19. When it is assumed that the temperature of the heating element 7 at the time of energization is constant, the quantity of heat Q given to fluid by the heating module 5 increases, as the flow rate Qs increases. The electric heating device 1 preferentially selects and energizes a heating element held by the heating module 5 provided adjacent to the flow path 3 having a relatively large flow rate of fluid.

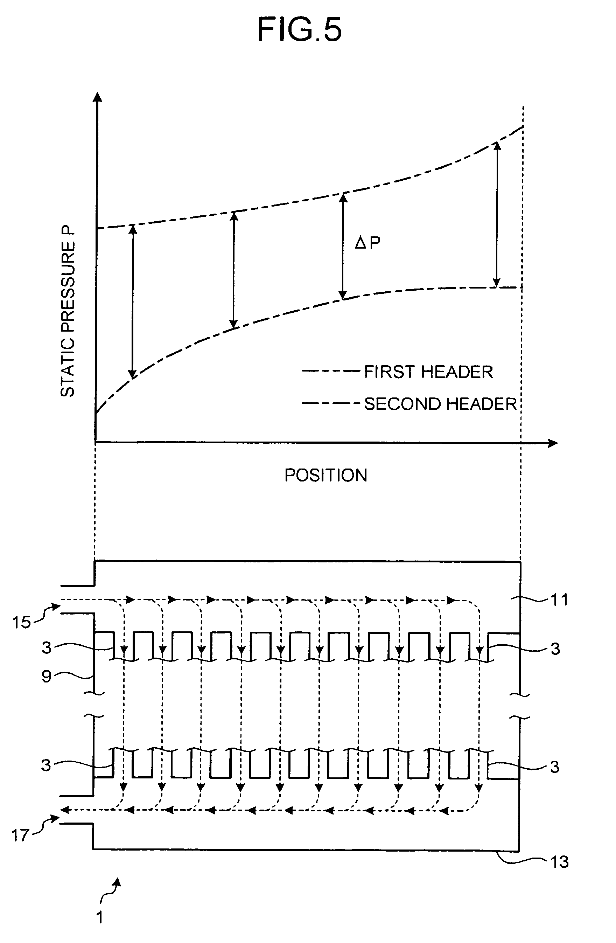

The flow rate of fluid in the respective flow paths 3 is explained here. Fig. 5 is a conceptual diagram of a static pressure distribution in the header. Static pressure inside the first header 11 or inside the second header 13 is plotted on a Y-axis in Fig. 5. A position in the first header 11 or the second header 13 is plotted on an X-axis in Fig. 5. In other words, the X-axis shows a distance from the end of the first header 11 on the fluid supply port 15 side or a distance from the end of the second header 13 on the fluid discharge port 17 side.

As described above, the fluid having flown into the first header 11 from the fluid supply port 15 flows sequentially from the flow path 3 closest to the fluid supply port 15 toward the flow path 3 away from the fluid supply port 15. Therefore, in the first header 11, the flow rate of fluid decreases as moving away from the fluid supply port 15 and flow velocity becomes slow. Along with this, as shown in Fig. 5, the static pressure in the first header 11 increases as moving away from the fluid supply port 15. On the other hand, in the second header 13, the flow rate of fluid increases as approaching the fluid discharge port 17 and the static pressure decreases as shown in Fig. 5.

The flow rate of fluid in the respective flow paths 3 is determined based on a static pressure difference ΔP between the first header 11 and the second header 13 where the flow path 3 is located. That is, the flow rate of fluid flowing in the flow path 3 increases, as the static pressure difference ΔP between the first header 11 and the second header 13 increases. According to Fig. 5, when the static pressure difference ΔP is explained by using the first header 11, the static pressure difference ΔP decreases from the end of the first header 11 on the fluid supply port 15 side toward a central part of the first header 11. Further, the static pressure difference ΔP increases from the central part of the first header 11 toward the end of the first header 11 on a side opposite to the fluid supply port 15. Accordingly, in the cross-sectional surface of the casing 9 orthogonal to the longitudinal direction of the flow path 3, the flow rate of fluid in the flow path 3 positioned in the central part in the lateral direction becomes the smallest, and the flow rate thereof in the flow path 3 positioned on the opposite ends in the lateral direction increases.

That is, at the time of intermediate output of the electric heating device 1, in the lateral direction in the cross-sectional surface of the casing 9 orthogonal to the longitudinal direction of the flow path 3, the heating element 7 held by the heating module 5 adjacent to the flow path 3 positioned on the outermost side is preferentially selected and energized.

According to the electric heating device 1, at the time of intermediate output, the flow path 3 having a relatively large flow rate of fluid, of the flow paths 3, can be preferentially selected and heated. That is, in the lateral direction in the cross-sectional surface of the casing 9 orthogonal to the longitudinal direction of the flow path 3, the flow path 3 on the outermost side can be preferentially selected and heated. The quantity of the heat Q that can be given to fluid by the heating module 5 increases as the flow rate $Q_s$ of fluid flowing in the flow path 3 increases. Therefore, when the electric heating device 1 is used, heating efficiency at the time of intermediate output can be improved.

Accordingly, because a predetermined quantity of heat can be acquired promptly, supply of fluid to the electric heating device 1 can be suspended at an early stage. Therefore, power or the like required for supplying fluid to the electric heating device 1 can be reduced. When the flow rate of fluid to be supplied to the electric heating device 1 is adjusted according to the quantity of heat required for the desired output, the flow rate of fluid at the time of intermediate output can be decreased. Also with this configuration, power or the like required for supplying fluid to the electric heating device 1 can be reduced.

Further, the electric heating device 1 includes the first header 11 and the second header 13. The flow path 3 is for example, a tubular structure such as a tube, and the end face thereof opens in the first header 11 and the second header 13. Because fluid heated by heat exchange with the heating module 5 flows in the flow path 3, leakage of fluid to outside of the flow path can be suppressed, as compared with a structure in which the flow path 3 is formed by partitioning the casing 9 by walls or the like.

In the electric heating device 1, a difference occurs in the flow rate in the flow path 3 due to provision of the first header 11 and the second header 13. However, even in the case that the electric heating device 1 does not include the first header 11 and the second header 13, when a plurality of flow paths are provided in the casing, a difference in the flow rate of fluid between the respective flow paths occurs at least occasionally. In such a case, therefore, the heating module 5 provided adjacent to the flow path and having a relatively large flow rate of fluid is preferentially selected at the time of intermediate output of the electric heating device, so that the heating elements 7 held by the heating module 5 generate heat, thereby enabling to improve the heating efficiency at the time of intermediate output.

An electric heater or the like can be used as the heating element 7 in the electric heating device 1; however, it is desired to use the PTC element, which is the positive-temperature-coefficient thermistor element. The PTC element generates heat by energization. Upon reaching a certain temperature, the PTC element largely increases its resistance, and is held at the certain temperature. Further, as the temperature increases a value of an electric current flowing in the PTC element decreases. Accordingly, by using the PTC element as the heating element 7, abnormal temperature rise in the heating module 5 in the electric heating device 1 can be prevented. Further, consumed power can be reduced, and power consumption required for heat generation of the heating element 7 can be also reduced.

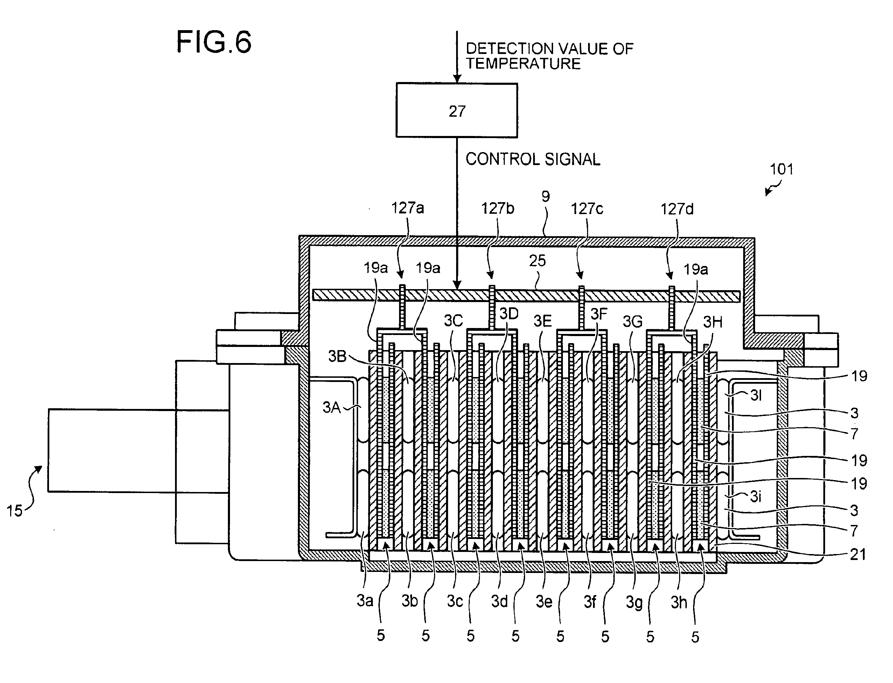

Fig. 6 is a sectional view for explaining a verification example of the electric heating device according to the first embodiment. Similarly to Fig. 3, Fig. 6 is a sectional view in which a surface cut along the one-dot chain line in Fig. 1 is viewed from the second header 13 toward a direction of the first header 11. In other words, Fig. 6 is a sectional view of the casing 9 orthogonal to the longitudinal direction of the flow path 3 as viewed from the second header 13 toward the direction of the first header 11. Like reference numerals refer to like members as those in the electric heating device 1, and redundant explanations thereof will be omitted. In an electric heating device 101 according to the verification example, in the cross-sectional surface of the casing 9 orthogonal to the longitudinal direction of the flow path 3, the flow paths 3 are arranged in two rows in the longitudinal direction and nine rows in the lateral direction. As shown in Fig. 6, when these are explained individually, the flow paths 3 are referred to, respectively, as a flow path 3A to a flow path 3I (an upper stage) , and as a flow path 3a to a flow path 3i (a lower stage). In the electric heating device 101, eight heating modules 5 are arranged between rows of the flow paths 3 in the lateral direction.

The electrode plate 19 held by the heating module 5 includes the protrusion 19a formed by protruding a part of the electrode plate 19. In the lateral direction in the cross-sectional surface of the casing 9 orthogonal to the longitudinal direction of the flow path 3, the protrusions 19a of the adjacent heating modules 5 are connected to each other. Accordingly, an energizing system 127 formed of two heating modules 5 is configured. In the electric heating device 101, four energizing systems are provided, and as shown in Fig. 6, when these are explained individually, the energizing systems 127 are referred to as energizing systems 127a, 127b, 127c, and 127d. The protrusions 19a of the two heating modules 5 connected to each other are respectively connected to the substrate 25 provided in the casing 9.

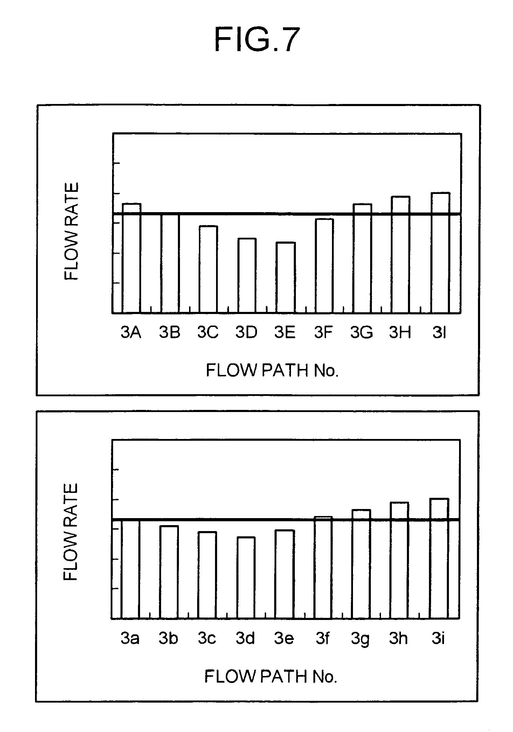

The flow rate of fluid in the respective flow paths 3 when fluid flows in the flow path 3 in the electric heating device 101 is explained. Fig. 7 depicts a flow rate of fluid flowing in the respective flow paths of the electric heating device shown in Fig. 6. In Fig. 7, a flow rate of fluid flowing in the respective flow paths 3 is plotted on the Y-axis, and the flow path number of the flow paths 3, in other words, a position of each of the flow paths 3 is plotted on the X-axis. The values shown in Fig. 7 are acquired based on a flow analysis of fluid flowing in the flow paths 3 using a computer.

As viewed in Fig. 7, it is understood that the flow rate of the flow path 3 in outside rows is relatively large in the lateral direction in the cross-sectional surface of the casing 9 orthogonal to the longitudinal direction of the flow path 3. Specifically, the total flow rate of the flow paths 3I and 3i is the largest, and then the total flow rate of the flow paths 3H and 3h is the second largest, followed by the total flow rate of the flow paths 3G and 3g and the total flow rate of the flow paths 3A and 3a. The difference in the flow rate of fluid flowing in the flow paths 3 occurs due to a static pressure difference of fluid flowing in the first header 11 and the second header 13.

In the electric heating device 101, at the time of intermediate output, the heating element 7 held by the heating module 5 adjacent to the flow path 3 having a relatively large flow rate of fluid is preferentially energized. Specifically, the energizing system 127d formed of the heating module 5 that can heat the flow paths 3I, 3i, 3H, and 3h and the heating module 5 that can heat the flow paths 3H, 3h, 3G, and 3g is preferentially energized by the substrate 25. The energizing system 127a is then preferentially energized, followed by the energizing system 127c. The number of systems to be energized is appropriately determined based on the output acquired by the electric heating device 101. Accordingly, for example, when two systems are to be energized, the energizing systems 127a and t 127d are energized. When three systems are to be energized, energization is performed with respect to the energizing systems 127a, 127d, and 127c.

In the verification example, the energizing system 127 is formed by connecting the protrusions 19a of the electrode plates 19 of two heating modules 5 with each other. However, like in the electric heating device 1, one energizing system can be formed of one heating module 5. In this case, the flow path to be heated can be finely selected as compared with a case that the one energizing system 127 is formed of two heating devices 7. On the other hand, like in the electric heating device 101, when plural heating modules 5 constitute the energizing system 127, the number of wiring connections from a power supply unit (not shown) can be less than the number of connections to the respective heating modules 5. Accordingly, in the electric heating device 101, weight reduction and space saving are realized. Further, the above configuration contributes to reduction of man-hour at the time of assembling the electric heating device 101.

[Second embodiment]

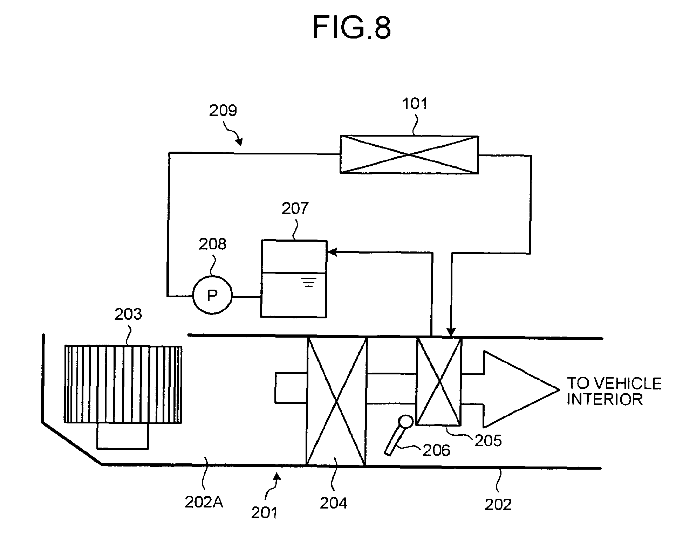

Fig. 8 is a schematic configuration diagram of a vehicle air conditioner. A vehicle air conditioner 201 according to a second embodiment of the present invention includes a casing 202 that forms an air flow path 202A for taking outside air or air in vehicle interior to adjust the temperature thereof and leads the air to the vehicle interior. In the vehicle air conditioner 201, as an example, the electric heating device 101 according to the above embodiment shown in Fig. 6 is applied. The detailed configuration of the electric heating device 101 is as described above, and explanations thereof will be omitted.

A blower 203, a cooler 204, a heater 205, which is an air conditioning heat exchange unit, and an air mix damper 206 are provided in the casing 202. A tank 207, a pump 208, and the electric heating device 101 according to the verification example described above are provided outside of the casing 202. The tank 207, the pump 208, the electric heating device 101, and the heater 205 constitute a fluid circulation route 209 in which fluid, which is a heating medium, circulates.

The blower 203 sucks outside air or air in the vehicle interior to increase pressure, and feeds air to a downstream side of the blower 203 in the air flow path 202A. The cooler 204 cools air fed from the blower 203. The cooler 204 includes an expansion valve, an evaporator or the like, to cool air passing through the cooler 204 by heat of vaporization generated when a refrigerant circulating therein evaporates.

The heater 205 heats air passing through the cooler 204 and cooled. A flow path in which fluid heated by the electric heating device 101 flows and a flow path in which air passes are provided inside the heater 205. Air is heated by heat exchange between fluid heated by the electric heating device 101 and air passing through the heater 205.

The air mix damper 206 adjusts a rate between a quantity of air that passes through the heater 205 and a quantity of air that flows bypassing the heater 205, to adjust a temperature of air mixed on the downstream side thereof. When heating is not required, the entire air is caused to bypass the heater 205 to reduce a pressure loss.

The tank 207 temporarily holds a part of the heating medium that circulates in the fluid circulation route 209. The tank 207 is arranged between the heater 205 and the pump 208 in the fluid circulation route 209. The pump 208 compresses fluid and supplies the fluid to the electric heating device 101. The pump 208 is arranged between the tank 207 and the electric heating device 101 in the fluid circulation route 209.

The downstream side of the casing 202 is connected to a plurality of vents that blow the temperature-adjusted air into the vehicle interior via a blowing-mode switching damper and duct.

As shown in Fig. 6, in the electric heating device 101 according to the present embodiment, four energizing systems 127a, 127b, 127c, and 127d are connected to the substrate 25, and heating capacity thereof is controlled in three output stages, which are maximum output, minimum output (zero output) , and intermediate output. Control is performed such that at the time of maximum output, all four systems are energized, at the time of minimum output, energization to all four systems are suspended, and at the time of intermediate output, only two systems are energized. Under such control, for example, a temperature sensor (not shown) provided in the vehicle interior detects the temperature in the vehicle interior and outputs a switching instruction from the controller 27 based on a detection value thereof to switch between the three stages.

At the time of heating the vehicle interior (in the winter), all four systems are energized, and fluid in the flow path 3 is heated by the respective heating modules 5. Heated fluid is fed to the heater 205 and heat-exchanged with air in the vehicle air conditioner 201, and the heated air is blown into the vehicle interior. Accordingly, heating is efficiently performed in a short time. On the other hand, at the time of cooling the vehicle interior (in the summer), because energization with respect to all four systems is suspended, fluid in the flow path 3 is not heated. At this time, because fluid does not need to be supplied to the electric heating device 101, the pump 208 is also suspended, thereby suppressing the power consumption.

Further, during an intermediate period (in the spring and autumn), by a train crew, adjustment of temperature can be required to adjust a set temperature in the vehicle interior to an intermediate one in between heating and cooling. That is, hot air and cold air are mixed substantially at a 50:50 ratio and adjusted, and the temperature-adjusted air is blown into the vehicle interior. When a predetermined temperature value is detected by the temperature sensor installed in the vehicle interior, the controller 27 transmits an instruction value of intermediate output to the electric heating device 101, and two systems are energized to heat fluid.

At this time, as explained with reference to Fig. 7, it has been already ascertained that there is a difference in the flow rate of fluid flowing in the respective flow paths 3 in the electric heating device 101 due to the static pressure difference $\Delta P$. Therefore, at the time of energizing the two systems, when the flow paths 3A, 3a and 3B, 3b and the flow paths 3I, 3i and 3H, 3h at the opposite ends having particularly a large flow rate are heated, fluid can be efficiently heated in a short time. Therefore, in the present embodiment, at the time of intermediate output, it is set beforehand that the two energizing systems 127a and 127d adjacent to the flow paths 3A, 3a, 3B, 3b, 3I, 3i, 3H, and 3h having a large flow rate of fluid are energized. Accordingly, heating efficiency can be improved without consuming unnecessary power such as power for heating a flow path having a small flow rate.

The flow rate of fluid can be also reduced to acquire a required quantity of heating, and power required to drive the pump for supplying fluid to the electric heating device 101 can be reduced. That is, a time (a flow rate) required for feeding fluid to acquire the required quantity of heating can be reduced, thereby reducing driving power of the pump. When the air conditioner according to the present embodiment is applied to an electric car, power consumption of the entire car can be reduced, thereby enabling efficient driving.

According to the vehicle air conditioner 201, because the electric heating device 101 according to the first embodiment is used for heating fluid, which is a heating medium, power used for air conditioning in the vehicle interior can be reduced. As described above, the electric heating device 101 has high heating efficiency at the time of intermediate output. Accordingly, at the time of intermediate output of the electric heating device 101, the flow rate of fluid circulated by the pump 208 can be reduced, and power consumed for driving the pump 208 can be also reduced. In the vehicle air conditioner 201, the electric heating device 101 according to the verification example is used; however, the electric heating device 1 can be also used.

[Industrial Applicability]

As described above, the electric heating device according to the present invention is useful for efficiently heating fluid flowing in the device at the time of intermediate output, and particularly suitable to be used as a heat source of an electric car or the like in which waste heat of an engine cannot be used as a heat source of a heating unit. Furthermore, the vehicle air conditioner according to the present invention is useful for decreasing the power to be used for air-conditioning in a vehicle interior.

[Reference Signs List]

| | |
|---|---|
| 1, 101 | electric heating device |
| 3 | flow path |
| 5 | heating module |
| 7 | heating element |
| 9 | casing |
| 11 | first header |
| 13 | second header |
| 15 | fluid supply port |
| 17 | fluid discharge port |
| 19 | electrode plate |
| 21 | insulating plate |
| 23 | frame |
| 25 | substrate |
| 27 | controller |
| 127 | energizing system |
| 201 | vehicle air conditioner |
| 202 | casing |
| 202A | air flow path |
| 203 | blower |
| 204 | cooler |
| 205 | heater |
| 206 | air mix damper |
| 207 | tank |
| 208 | pump |
| 209 | fluid circulation route |

**Claims**

1. An electric heating device (1;101) comprising:

   a plurality of flow paths (3;3A-I;3a-i) in which fluid can flow;
   a plurality of heating modules (5) arranged adjacent to the flow paths (3;3A-I;3a-i) and including heating elements (7) adapted to generate heat by energization; **characterized by**:

      means for preferentially energizing, at a time of an intermediate output of the electric heating device (1; 101), the heating element (7) in the heating module (5) provided adjacent to a flow path (3;3A-I;3a-i) among the plurality of flow paths (3;3A-I;3a-i) having a flow rate of fluid that is larger than that of others among the plurality of flow paths (3;3A-I;3a-i).

2. The electric heating device (1;101) of claim 1, wherein the heating element (7) is a PTC element.

3. The electric heating device (1;101) of claim 1 or 2, comprising:

   a first header (11) that is provided at one end of the flow paths (3;3A-I;3a-i) for supplying fluid to the flow paths (3;3A-I;3a-i); and
   a second header (13) that is provided at the other end of the flow paths (3;3A-I;3a-i) for collecting fluid discharged from the flow paths (3;3A-I;3a-i), wherein

the first header (11) includes a fluid supply port (15) for supplying fluid into the first header (11), and
the second header (13) includes a fluid discharge port (17) for discharging fluid to an outside of the second header (13).

4. The electric heating device (1;101) of claim 1, 2 or 3, wherein the flow paths (3;3A-I;3a-i) and the heating modules (5) are alternately arranged.

5. The electric heating device (1;101) of any one of claims 1 to 4, wherein the difference in the flow rate among the plurality of flow paths (3;3A-I;3a-i) is determined based on the static presssure difference ($\Delta$P) between the inlet and the outlet of the respective flow paths (3;3A-I;3a-i) which is predetermined by flow analysis of fluid flow in the flow paths (3;3A-I;3a-i).

6. The electric heating device (1;101) of any one of claims 1 to 5, comprising a controller (27) for energizing the heating elements (7) of the plurality of heating modules (5), wherein the controller (27) is adapted to selectively energize the heating element (7) in the heating module (5) that is set beforehand to be energized at the time of the intermediate output of the electric heating device (1;101).

7. The electric heating device (1;101) of claim 6, wherein the controller (27) includes a temperature detector and is adapted to instruct a predetermined output to the electric heating device (1;101) according to a temperature detected by the temperature detector.

8. A vehicle air conditioner (201) comprising:

   a blower (203) for taking outside air into an air flow path (202A) of an air conditioning unit and circulating air in a vehicle interior;
   a cooler (204) that is arranged on a downstream side of the blower (203) for cooling outside air; and
   a heater (205) that is arranged on a downstream side of the cooler (204) for heating air cooled by the cooler (204);
   an electric heating device (1;101) as defined in any one of claims 1 to 5 for heating a fluid supplied to the heater (205); and
   a circulation circuit (209) for circulating the fluid to the electric heating device (1;101).

9. The vehicle air conditioner (201) of claim 8, comprising a controller (27) that includes an in-vehicle temperature detector and is adapted to instruct a predetermined output to the electric heating device (1;101) according to an in-vehicle temperature detected by the in-vehicle temperature detector.


**Patentansprüche**

1. Eine elektrische Heizvorrichtung (1;101) mit:

   einer Vielzahl von Strömungswegen (3;3A-I;3a-i), in welchen Fluid strömen kann,
   einer Vielzahl von Heizmodulen (5), welche angrenzend an die Strömungswege (3;3A-I;3a-i) angeordnet sind und Heizelemente (7) umfassen, welche dazu eingerichtet sind, durch Energiezufuhr Wärme zu erzeugen, **gekennzeichnet durch**:

   Mittel zur bevorzugten Energiezufuhr, zu einer Zeit einer Teilleistung der elektrischen Heizvorrichtung (1; 101), zu dem Heizelement (7) in dem Heizmodul (5), welches angrenzend an einen Strömungsweg (3;3A-I;3a-i) aus der Vielzahl von Strömungswegen (3;3A-I;3a-i) vorgesehen ist, der eine Fluidströmungsrate besitzt, die größer ist als die von anderen aus der Vielzahl von Strömungswegen (3;3A-I;3a-i).

2. Die elektrische Heizvorrichtung (1;101) gemäß Anspruch 1, wobei das Heizelement (7) ein PTC-Element ist.

3. Die elektrische Heizvorrichtung (1;101) gemäß Anspruch 1 oder 2, mit:

   einem ersten Verteiler (11), welcher an einem Ende der Strömungswege (3;3A-I;3a-i) zum Zuführen von Fluid zu den Strömungswegen (3;3A-I;3a-i) vorgesehen ist, und
   einem zweiten Verteiler (13), welcher an dem anderen Ende der Strömungswege (3;3A-I;3a-i) zum Sammeln von Fluid, welches aus den Strömungswegen (3;3A-I;3a-i) ausgetragen wird, vorgesehen ist, wobei

der erste Verteiler (11) einen Fluidzuführanschluss (15) zum Zuführen von Fluid in den ersten Verteiler (11) umfasst, und,

der zweite Verteiler (13) einen Fluidaustraganschluss (17) zum Austragen von Fluid zu einer Außenseite des zweiten Verteilers (13) umfasst.

4. Die elektrische Heizvorrichtung (1;101) gemäß Anspruch 1, 2 oder 3, wobei die Strömungswege (3;3A-I;3a-i) und die Heizmodule (5) abwechselnd angeordnet sind.

5. Die elektrische Heizvorrichtung (1;101) gemäß einem der Ansprüche 1 bis 4, wobei die Differenz der Strömungsrate unter der Vielzahl von Strömungswegen (3;3A-I;3a-i), basierend auf der Differenz des statischen Drucks ($\Delta P$) zwischen dem Einlass und dem Auslass der jeweiligen Strömungswege (3;3A-I;3a-i) bestimmt wird, welche durch eine Strömungsanalyse von Fluidströmung in den Strömungswegen (3;3A-I;3a-i) vorbestimmt ist.

6. Die elektrische Heizvorrichtung (1;101) gemäß einem der Ansprüche 1 bis 5 mit einem Kontroller (27) für eine Energiezufuhr zu den Heizelementen (7) der Vielzahl von Heizmodulen (5), wobei der Kontroller (27) dazu eingerichtet ist, dem Heizelement (7) in dem Heizmodul (5) selektiv Energie zuzuführen, welches zuvor eingestellt wurde, um zu der Zeit der Teilleistung der elektrischen Heizvorrichtung (1;101) mit Energie versorgt zu werden.

7. Die elektrische Heizvorrichtung (1;101) gemäß Anspruch 6, wobei der Kontroller (27) einen Temperaturdetektor umfasst und dazu eingerichtet ist, eine vorbestimmte Ausgabe an die elektrische Heizvorrichtung (1;101) gemäß einer Temperatur, welche durch den Temperaturdetektor festgestellt wurde, anzuweisen.

8. Eine Fahrzeugklimaanlage (201) mit:

einem Gebläse (203) zum Einbringen von Außenluft in einen Luftströmungsweg (202A) einer Klimatisierungseinheit und zum Zirkulieren von Luft in einem Fahrzeuginnenraum,
einem Kühler (204), welcher auf einer stromabwärts liegenden Seite des Gebläses (203) zum Kühlen von Außenluft angeordnet ist, und
einem Heizer (205), welcher auf einer stromabwärts liegenden Seite des Kühlers (204) zum Erhitzen von Luft, die durch den Kühler (204) gekühlt wurde, angeordnet ist,
einer elektrischen Heizvorrichtung (1;101) gemäß einem der Ansprüche 1 bis 5 zum Erhitzen eines Fluids, welches dem Heizer (205) zugeführt wird, und
einem Zirkulationskreislauf (209) zum Zirkulieren des Fluids zu der elektrischen Heizvorrichtung (1;101).

9. Die Fahrzeugklimaanlage (201) gemäß Anspruch 8 mit einem Kontroller (27), welcher einen Fahrzeug-Innentemperaturdetektor umfasst und dazu eingerichtet ist, eine vorbestimmte Ausgabe an die elektrische Heizvorrichtung (1;101) gemäß einer festgestellten Fahrzeug-Innentemperatur, welche durch den Fahrzeug-Innentemperaturdetektor festgestellt wurde, anzuweisen.

**Revendications**

1. Dispositif de chauffage électrique (1 ; 101) comprenant :

une pluralité de voies d'écoulement (3 ; 3A à I ;
3a à i) dans lesquelles un fluide peut s'écouler ; et
une pluralité de modules chauffants (5) agencés adjacents aux voies d'écoulement (3 ; 3A à I ; 3a à i) et incluant des éléments chauffants (7) adaptés pour générer de la chaleur par alimentation en énergie ; **caractérisé par** :

un moyen permettant d'alimenter préférentiellement en énergie, au moment d'une sortie intermédiaire du dispositif de chauffage électrique (1 ; 101), l'élément chauffant (7) dans le module chauffant (5) fourni adjacent à un chemin d'écoulement (3 ; 3A à I ; 3a à i) parmi la pluralité de voies d'écoulement (3 ; 3A à I ; 3a à i) ayant un débit de fluide qui est plus grand que celui des autres parmi la pluralité de voies d'écoulement (3 ; 3A à I ; 3a à i).

2. Dispositif de chauffage électrique (1 ; 101) selon la revendication 1, dans lequel l'élément chauffant (7) est un élément à coefficient de température positif.

**3.** Dispositif de chauffage électrique (1 ; 101) selon la revendication 1 ou 2, comprenant :

un premier collecteur (11) qui est disposé à une extrémité des voies d'écoulement (3 ; 3A à I ; 3a à i) pour alimenter les voies d'écoulement (3 ; 3A à I ; 3a à i) en fluide ; et
un second collecteur (13) qui est disposé à l'autre extrémité des voies d'écoulement (3 ; 3A à I ; 3a à i) pour collecter un fluide évacué des voies d'écoulement (3 ; 3A à I ; 3a à i), dans lequel
le premier collecteur (11) inclut une lumière d'alimentation en fluide (15) pour alimenter le premier collecteur (11) en fluide, et
le second collecteur (13) inclut une lumière d'évacuation de fluide (17) pour évacuer un fluide vers un extérieur du second collecteur (13).

**4.** Dispositif de chauffage électrique (1 ; 101) selon la revendication 1, 2 ou 3, dans lequel les voies d'écoulement (3 ; 3A à I ; 3a à i) et les modules chauffants (5) sont agencés de manière alternée.

**5.** Dispositif de chauffage électrique (1 ; 101) selon l'une quelconque des revendications 1 à 4, dans lequel la différence de débit parmi la pluralité de voies d'écoulement (3 ; 3A à I ; 3a à i) est déterminée en se basant sur la différence de pression statique ($\Delta$P) entre l'admission et le refoulement des voies d'écoulement (3 ; 3A à I ; 3a à i) respectifs qui est prédéterminé par analyse d'écoulement de fluide dans les voies d'écoulement (3, 3A à I, 3a- i).

**6.** Dispositif de chauffage électrique (1 ; 101) selon l'une quelconque des revendications 1 à 5, comprenant un régulateur (27) permettant d'alimenter en énergie les éléments chauffants (7) de la pluralité de modules chauffants (5), dans lequel le régulateur (27)
est adapté pour alimenter sélectivement en énergie l'élément chauffant (7) dans le module chauffant (5) qui est réglé au préalable pour être alimenté en énergie au moment de la sortie intermédiaire du dispositif de chauffage électrique (1 ; 101).

**7.** Dispositif de chauffage électrique (1 ; 101) selon la revendication 6, dans lequel le régulateur (27) inclut un détecteur de température et est adapté pour donner l'instruction d'une sortie prédéterminée au dispositif de chauffage électrique (1 ; 101) selon une température détectée par le détecteur de température.

**8.** Climatiseur de véhicule (201) comprenant :

une soufflante (203) permettant de prélever l'air extérieur pour l'amener dans un chemin d'écoulement d'air (202A) d'une unité de climatisation et de faire circuler l'air dans un intérieur de véhicule ;
un refroidisseur (204) qui est agencé sur un côté aval de la soufflante (203) pour refroidir l'air extérieur ; et
un réchauffeur (205) qui est agencé sur un côté aval du refroidisseur (204) pour chauffer l'air refroidi par le refroidisseur (204) ;
un dispositif de chauffage électrique (1 ;101) tel que défini dans l'une quelconque des revendications 1 à 5 pour chauffer un fluide fourni au réchauffeur (205) ; et
un circuit de circulation (209) pour faire circuler le fluide vers le dispositif chauffant électrique (1 ; 101).

**9.** Climatiseur de véhicule (201) selon la revendication 8, comprenant un régulateur (27) qui inclut un détecteur de température dans le véhicule et est adapté pour donner l'instruction d'une sortie prédéterminée au dispositif de chauffage électrique (1 ; 101) selon une température dans le véhicule détectée par le détecteur de température dans le véhicule.

# FIG.1

# FIG.2

# FIG.3

DETECTION VALUE OF TEMPERATURE

27

CONTROL SIGNAL

1

9

25    3    19a

3
7
19
19
3
7
21

5   5   5   5   9   5   5   5

3

15

# FIG.4

# FIG.5

# FIG.6

DETECTION VALUE OF TEMPERATURE

27

CONTROL SIGNAL

101

127a    127b    9    127c    127d

19a   19a    25    19a

3C    3D    3E    3F    3G    3H

3B

3A

3I

19

3

7

19

19

3i

3

7

21

15

3a   3b   3c   3d   3e   3f   3g   3h

5    5    5    5    5    5    5    5

EP 2 353 898 B1

# FIG.7

# FIG.8

TO VEHICLE
INTERIOR

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008007106 A

- US 6093909 A